# EUROPÄISCHE PATENTANMELDUNG

(11) **EP 1 442 937 A2**
(43) Veröffentlichungstag der Anmeldung: **04.08.2004**
(21) Anmeldenummer: 04000824.5
(22) Anmeldetag: 16.01.2004
(51) Int. Cl.: B60R 7/06, B65D 25/00, B60S 1/50

(54) **Medienvorratsbehälter**

(30) Priorität: 30.01.2003 DE 10306628
(71) Anmelder: O & K Orenstein & Koppel GmbH, 13581 Berlin (DE)
(72) Erfinder: Lechler, Gerald, Dipl.-Ing., 13591 Berlin (DE)
(74) Vertreter: Müller, Lutz

(57) **Zusammenfassung**

Die Erfindung betrifft einen Medienvorratsbehälter (1) für Fahrzeuge, insbesondere für Erdbewegungsmaschinen und Landmaschinen, zur Bevorratung von fahrzeugspezifischen Medien. Die Mantelflächen (5) des Medienvorratsbehälters (1) sind derart geformt und zueinander ausgebildet, dass diese Mantelflächen (5) Aufnahmeräume (3) für Utensilien bilden.
Der Medienvorratsbehälter (1) übernimmt neben der logistischen Doppelfunktion, nämlich die gleichzeitige Bevorratung von Medien und Utensilien, gegebenenfalls auch Funktionen zur Wärmeübertragung. Durch die Ausbildung des Medienvorratsbehälters (1) als Hohlkörper mit ausgebildeten Kammerwänden (15) können auch mehrere Medien gleichzeitig bevorratet werden.

## Beschreibung

Die Erfindung betrifft einen Medienvorratsbehälter für Fahrzeuge, insbesondere für Erdbewegungsmaschinen und Landmaschinen, zur Bevorratung von fahrzeugspezifischen Medien.

Die in Fahrzeugen bevorrateten und der Betriebssicherheit sowie spezieller Betriebsfunktionen dienenden Medien sind: Kühlmittel, Trinkwasser, Bremsflüssigkeit, Schmiermittel und Scheibenwischwasser. Die Vorratsbehälter dieser Medien sind üblicherweise außerhalb der Fahrerkabine voneinander getrennt in Vorratsbehältern angeordnet. Die Gründe für diese Anordnung liegen einerseits darin, dass die Bevorratung dieser Medien unmittelbar an ihrem Verbrauchsort erfolgt und andererseits in dem nur beschränkt zur Verfügung stehenden Platzangebot in Fahrerkabinen.

Fahrzeugspezifische Medien, die einem Verbrauch oder einer Versottung unterliegen, müssen turnusmäßig aufgefüllt bzw. ausgetauscht werden. Da diese Wartungsaufgaben oftmals in einem vom Hersteller vorgegebenen Intervall in der Werkstatt durchzuführen sind, kann es vorkommen, dass kritische Füllstände der Medien in den Vorratsbehältern temporär unterschritten werden. Die Kontrolle ausreichender Füllstände und gegebenenfalls das erforderliche Auffüllen dieser Vorratsbehälter muss daher zwischen den Werkstattaufenthalten operativ vom Fahrer vorgenommen werden. Da diese Vorratsbehälter örtlich getrennt und vor allem außerhalb der Fahrerkabine angeordnet sind, werden diese Erfordernisse aus Gründen der Bequemlichkeit oder des dafür notwendigen Zeitaufwandes nur unzureichend umgesetzt.

Das seit längerer Zeit bestehende Bedürfnis, Vorratsbehälter von Medien, die einem erhöhten Verbrauch unterliegen, im Sicht- und Handlungsbereich des Fahrers anzuordnen und gegebenenfalls miteinander zu kombinieren, konnte bislang aus Gründen des nicht ausreichend zur Verfügung stehenden Platzangebotes in der Fahrerkabine nur teilweise gestillt werden.

Bekannt aus der DE 100 20 299 A1 ist ein kombinierter Sammelbehälter, der in getrennten Kammern dieses Sammelbehälters Kühlwasser und Scheibenwischwasser bevorratet. Der Grundgedanke dieser Erfindung liegt darin, vor allem in den Wintermonaten das durch das Kühlwasser erwärmte Scheibenwischwasser zur Reinigung der Scheiben nutzen zu können. Alternativ kann in diesem Sammelbehälter eine separate Kammer zum Bevorraten von Bremsflüssigkeit ausgebildet sein.

Nachteilig hierbei ist jedoch, dass die Befüllung außerhalb der Fahrerkabine erfolgt. Eine permanente Sichtkontrollmöglichkeit der entsprechenden Füllstände ist nicht gewährleistet.

Die Aufgabe der Erfindung ist es, einen Medienvorratsbehälter derart auszubilden und anzuordnen, dass in separaten Kammern bzw. Kammerbereichen verschiedenartige Medien aufgenommen werden können und dabei die Befüllung und die Füllstandskontrolle in Griff- bzw. Sichtweite des Fahrers realisiert werden kann. Ferner soll dieser Vorratsbehälter im Bauraum optimiert werden und den funktionalen Ansprüchen des Innenraums einer Fahrerkabine gerecht werden.

Diese Aufgabe wird erfindungsgemäß durch die Merkmale des Anspruchs 1 gelöst; die Unteransprüche zeigen weitere vorteilhafte Ausgestaltungen der Erfindung.

Hierbei besteht der Medienvorratsbehälter aus einem geschlossenen, formstabilen Hohlkörper, dessen Mantelflächen derart geformt und zueinander ausgebildet sind, dass diese einen oder mehrere von diesen Mantelflächen umfassende(n) Aufnahmeräume zur Ablage für Utensilien und persönliche Gegenstände einschließen. Durch die Mantelflächen des Hohlkörpers wird somit ein Raumvolumen umschlossen, welches zur Bevorratung von fahrzeugspezifischen Medien dient. Zur Befüllung des Hohlkörpers und zur Entnahme von Medien aus selbigen ist am Hohlkörper ein Anschluss vorgesehen.

Dieser Medienvorratsbehälter übernimmt daher erfindungsgemäß eine Doppelfunktion. Einerseits können der Betriebssicherheit und spezieller Betriebsfunktionen dienende Medien bevorratet werden, andererseits wird durch eine zweckmäßige Formgebung eine großzügige Ablagefläche bzw. ein Ablageraum geschaffen. Durch die Kombination von einer Ablage mit einem Vorratsbehälter konnten Platzprobleme, insbesondere in der Fahrerkabine oder im Motorraum des Fahrzeugs, größtenteils beseitigt werden.

Die geometrische Form des Medienvorratsbehälters ist vorzugsweise zylindrisch oder quaderförmig, um Kühlbehälter, einzelne Dosen oder Trinkflaschen formschlüssig aufnehmen zu können. Mit der Ausbildung von Sektionen im Bodenteil des Medienvorratsbehälters werden separate Bereiche geschaffen, die ein systematisches Organisieren, also Einsortieren und Lagern, einzelner Gegenstände gestattet. Sektionen sind durch Trennelemente abgeteilt. Als Trennelemente können dazu bevorzugt Trennstege, Trennplatten oder Anschläge eingesetzt werden, welche während des Herstellungsprozesses des Medienvorratsbehälters oder nachträglich eingebracht werden. Diese Trennelemente werden auf dem rasterartig ausgebildeten Bodenteil des Medienvorratsbehälters befestigt. Eine optimale Anpassung der Sektionen an die Grundfläche der aufzunehmenden Utensilien kann damit schnell und variabel durchgeführt werden.

Es besteht darüber hinaus die Möglichkeit, kleinere Gegenstände, wie z. B. Werkzeuge, Taschenlampen oder die Verpflegung des Fahrers, in abgeschlossene Aufnahmeboxen innerhalb der von den Mantelflächen des Medienvorratsbehälters eingeschlossenen Raumvolumen unterzubringen. Damit ergibt sich eine noch größere Übersichtlichkeit bei der Bevorratung verschiedener Utensilien.

Wegen der guten plastischen Verformbarkeit während des Herstellungsprozesses und des geringen Gewichts eignen sich insbesondere Kunststoffe für die Verwendung als Medienvorratsbehälter. Darüber hinaus lassen sich Kunststoffe einfärben, um eine optisch ansprechende Wirkung, vor allem bei einer Anordnung dieses Medienbevorratungsbehälters in der Fahrerkabine, zu erzielen.

In einer besonders vorteilhaften Ausführung sind in dem Hohlkörper Kammerwände angeordnet, die die Innen- und Außenwand des Hohlkörpers miteinander verbinden. Somit werden separate Kammerbereiche geschaffen, um verschiedene Medien innerhalb eines Hohlkörpers bevorraten zu können. Beispielsweise lassen sich Scheibenwischwasser und Bremsflüssigkeit somit gemeinsam in diesem Medienvorratsbehälter bevorraten. Mit einem in der Fahrerkabine angeordneten Medienvorratsbehälter kann in den Wintermonaten auf Frostschutzzusätze gänzlich verzichtet werden, da das Scheibenwischwasser stets durch die Innenraumluft der Fahrerkabine ausreichend temperiert ist. Der Reinigungseffekt ist zudem bei erwärmtem Wasser größer gegenüber kaltem Wasser.

Da erfindungsgemäß durch die Formgebung dieses Behälters eine großzügige Ablagemöglichkeit geschaffen wurde, lassen sich konfektionierte Trinkwasser- oder Bremsflüssigkeitsflaschen problemlos deponieren. Es versteht sich für den Fachmann von selbst, dass neben diesen genannten Medien auch andere geeignete Flüssigkeiten, wie z. B. Kühlwasser, Trinkwasser oder Schmiermittel, gelagert werden können.

Der Medienvorratsbehälter übernimmt neben logistischen Funktionen, nämlich der gleichzeitigen Bevorratung von flüssigen Medien und Utensilien, auch Funktionen zur Wärmeübertragung. Beispielsweise können die Behälterund Kammerwände wärmedurchlässig ausgebildet sein, um einen Wärmeaustausch zwischen den flüssigen Medien oder zwischen flüssigen Medien und den festen Utensilien zu ermöglichen. Der Vorteil besteht für diesen Anwendungsfall beispielsweise darin, dass in den Wintermonaten motorseitig erwärmtes Kühlwasser zusätzlich zur Erwärmung von Scheibenwischwasser dient. Alternativ können die Behälter- und Kammerwände thermisch isoliert ausgebildet sein, um einen Wärmeaustausch zwischen benachbarten, unterschiedlich temperierten Medien oder Utensilien zu vermeiden.

Bei einer besonders vorteilhaften Ausgestaltung der Erfindung sind in einzelne Kammerbereiche oder in den Aufnahmeraum des Hohlkörpers Wärmeübertrager in Form eines Kältemittelverdampfers oder eines Heizungswärmeübertragers eingebracht. Diese Anwendung erstreckt sich insbesondere von der Kühlung von Getränken und der Pausenverpflegung des Fahrers bis hin zur Erwärmung von Trinkwasser.

Die Medienentnahme und die Medienbefiillung des Medienvorratsbehälters wird durch einen separaten oder gemeinsamen Anschluss realisiert, der in Abhängigkeit des daran angeschlossenen Mediensystems verschiedenartig ausgebildet sein kann. Da üblicherweise bei Verwendung des Medienvorratsbehälters als Scheibenwischwasserreservoirs Kunststoffschläuche zur Versorgung der Spritzdüsen mit Scheibenwischwasser eingesetzt werden, ist der Anschluss als Muffe ausgebildet. Für besondere Anwendungsfälle weist der Anschluss ein Gewinde auf oder ist als Dreh- Steckverbindung gefertigt.

Bei der Ausbildung des Anschlusses als gemeinsamer Anschluss ist erfindungsgemäß im vor- bzw. nachgeschalteten Mediensystem ein Dreiwegeventil oder T- Stück vorgeschaltet. Alternativ kann die Abdeckvorrichtung des Anschlusses, vorzugsweise ein Schraubdeckel, als Doppelanschluss ausgebildet sein. Für spezielle Anwendungsfälle ist der Medienbehälter mit einem separaten Füllstutzen ausgestattet, der ein zügiges Befüllen, insbesondere mit zähen Flüssigkeiten, problemlos ermöglicht.

Ferner ist es bei einer weiteren Verbesserung der bisher beschriebenen Ausgestaltungen sinnvoll, durch eine gezielte Anordnung des Anschlusses den maximalen Füllungsgrad des Hohlkörpers bzw. einzelner Kammerbereiche zu beschränken. Dies wird dadurch erreicht, indem der Anschluss auf verschiedenen Höhenniveaus am Hohlkörper bzw. an einzelnen Kammerbereichen ausgebildet ist.

Bei einer weiteren vorteilhaften Ausgestaltung der Erfindung weist der Medienvorratsbehälter eine Füllstandsanzeige auf. Diese kann in den Medienvorratsbehälter als transparente und markierte Skala integriert oder extern angeordnet sein. Diese als Kontrollinstrument dienende Füllstandsanzeige erweist sich vor allem dann als zweckmäßig, wenn im Medienvorratsbehälter Medien bevorratet werden, deren Füllstände bisher nicht oder nur schwer zugänglich waren oder deren Füllhöhe von wesentlicher Bedeutung für die Betriebssicherheit des Fahrzeuges ist.

Im Betriebszustand werden Bereiche des Mediensystem und gegebenenfalls auch der Hohlkörper bzw. die Kammerbereiche des formstabilen Medienvorratsbehälters mit Druck beaufschlagt, um eine Entnahme der Medien zu ermöglichen. Für diesen Zweck wird eine oder mehrere Pumpe(n) eingesetzt, deren Förderhöhe und Fördervolumen auf das Medium und das an die Pumpe angeschlossene Mediensystem abgestimmt ist. Die alternative Druckbeaufschlagung des Hohlkörpers bzw. der Kammerbereiche erfolgt bestimmungsgemäß in Abhängigkeit des zu bevorratenden Mediums.

Da der Einsatz des erfindungsgemäßen Medienvorratsbehälters nicht ausschließlich auf die Verwendung im Innenraum von Fahrzeugkabinen beschränkt ist, kann dieser auch eine abschließbare und witterungsbeständige Abdeckung aufweisen.

Eine hängende Befestigung des Medienvorratsbehälters lässt sich darüber hinaus unter Zuhilfenahme der am Medienvorratsbehälter vorhandenen Haltevorrichtungen realisieren.

Die signifikanten Vorteile und Merkmale der Erfindung gegenüber dem Stand der Technik sind im Wesentlichen:
■ geringerer Platzbedarf gegenüber herkömmlichen separat ausgebildeten Medienvorratsbehältern und Ablagen,
■ gemeinsame Bevorratung von einem oder mehreren Medien in einem Behälter durch Ausbildung von Kammerwänden,
■ variable Ablagemöglichkeiten durch rasterartig ausgebildetes Bodenteil mit Trennelementen,
■ Behälter übernimmt neben logistischen Funktionen auch Funktionen zur Wärmeübertragung,
■ separat beheizbare oder kühlbare Kammerbereiche durch Einbringen von Wärmeübertragern.

Nachstehend wird die Erfindung beispielhaft anhand der folgenden Zeichnungen näher erläutert.

Dabei zeigen:
- Fig. 1:: eine Rückansicht des Medienvorratsbehälters
- Fig. 2:: eine Frontansicht des Medienvorratsbehälters.

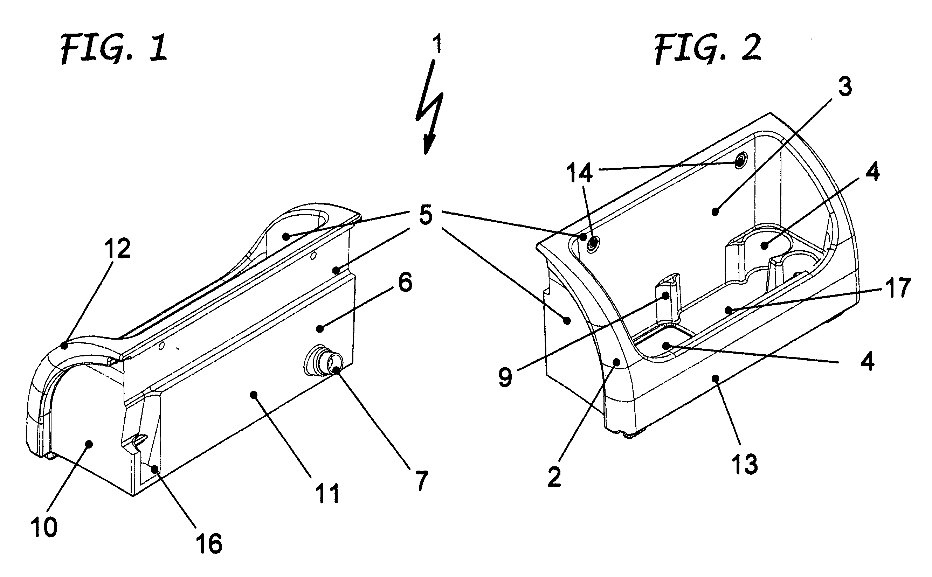

Fig. 1 und Fig. 2 illustrieren den erfindungsgemäßen Medienvorratsbehälter 1 in Rück- und Frontansicht. Der als Hohlkörper 2 ausgebildete Medienvorratsbehälter 1 bevorratet in dem von den Mantelflächen 5 des Hohlkörpers 2 umschlossenen Raumvolumen die entsprechenden Medien 6. Das zur Bevorratung dieser Medien 6 zur Verfügung stehende Raumvolumen ergibt sich hierbei aus der Differenz eines vollständig geschlossenen Hohlkörpers 2 und des durch die Mantelflächen 5 des Medienvorratsbehälters 1 umschlossenen Aufnahmeraums 3.

Der Hohlkörper 2 besteht aus einer Rückwand 11 und einer Vorderwand 13, zwei parallel zueinander beabstandeten identischen Seitenwänden 10 und einem von diesen Wänden eingeschlossenen Bodenteil 17. Die Rückwand 11 und Vorderwand 13 sind hierbei vorzugsweise orthogonal zu den kreissegmentförmig ausgebildeten Seitenwänden 10 angeordnet. Die Krümmung der Seitenwände 10 erstreckt sich ausgehend von der Rückwand 11 bis zur Vorderwand 13 des Hohlkörpers 2, wobei der gedachte Mittelpunkt des zugehörigen Kreises des Kreissegmentes durch den Schnittpunkt der hinteren Längskante des Bodenteils 17 mit einer der nicht gekrümmten Kanten der Seitenwände 10 beschrieben wird. Der dieses Kreissegment begrenzende Bogen entspricht dabei der Kante einer Schmalseite der gekrümmten Vorderwand 13. Die Vorderwand 13 ist in Abhängigkeit der Volumina der aufzunehmenden Utensilien 4 derart ausgebildet, dass die Bestückung des nach oben und gegebenenfalls nach vorn geöffneten Medienvorratsbehälters 1 problemlos erfolgen kann.

Die Medienentnahme und gegebenenfalls die Medienbefüllung wird durch einen an dieser Rückwand 11 ausgebildeten Anschluss 7 realisiert. Für diesen Zweck ist im nach- bzw. vorgeschalteten Mediensystem ein nichtdargestelltes Dreiwegeventil angeordnet. Der besagte Anschluss 7 ist vorteilhafterweise als Muffe ausgebildet, um den Medienvorratsbehälter 1 preisgünstig und montagefreundlich mit einem flexiblen Mediensystem zu verbinden. Alternativ kann dieser Anschluss auch ein Gewinde aufweisen.

Die Druckbeaufschlagung der Medien 6 erfolgt mittels einer Pumpe, die in einer an der Rückwand des Medienvorratsbehälters ausgebildeten Pumpenaufnahme 16 gehaltert ist. Im betriebsfertigem Zustand schließt die Pumpe bündig mit der Rückwand 11 ab.

Zur Erfassung des Füllstandes der bevorrateten Medien 6 wird eine nichtdargestellte Füllstandsanzeige verwendet, die unmittelbar oder mittelbar am Medienvorratsbehälter 1 angeschlossen ist. Besonders vorteilhaft erweist sich die Füllstandsanzeige dann, wenn Medien 6 gespeichert werden, deren Füllstandshöhe von besonderer Bedeutung für die Betriebssicherheit des Fahrzeugs, z. B. wenn diese Bremsflüssigkeit enthalten, sind.

Auf dem Bodenteil 17 und/oder an den Innenseiten der Mantelflächen 5 des Medienvorratsbehälter 1 sind Trennelemente 9 eingebracht, die das Bodenteil 17 in Sektionen teilt. Diese Trennelemente 9 entsprechen dabei der Grundfläche gängiger Utensilien 4, wie z. B. Flaschen oder einer Kühlbox. Zweckmäßigerweise lassen sich diese Trennelemente 9 entnehmen und gegebenfalls neu anordnen. Das Bodenteil 17 enthält dazu eine nichtdargestellte Rasterung, auf der die Trennelemente 9 positioniert werden.

Die Unterseite des Bodenteils 17 ist in Abhängigkeit der Montageart, nämlich hängend oder stehend, eben oder profiliert ausgebildet. Für eine stehende Montage erweisen sich Standfüße mit einer rutschfesten Oberflächenstruktur als besonders vorteilhaft. Bei der hängenden Montage erfolgt die Arretierung des Medienvorratsbehälters 1 durch Schrauben, die durch die ihrer Größe entsprechende Bohrungen in der ebenen Rückwand 11 des Medienvorratsbehälters 1 geführt sind.

Die gekrümmten Kantenbereiche der Vorderwand 13 und der Seitenwände 10 weisen aus optischen und statischen Gründen eine Materialverdickung, im speziellen Anwendungsbeispiel eine Versteifung, auf.

Die im bestimmungsmäßigen Betrieb noch sichtbare Oberfläche des Medienvorratsbehälters 1 ist insbesondere optisch an den Innenraum der Fahrerkabine angepasst. Mehrere horizontal und dabei parallel zueinander verlaufende Nuten setzen die klare Linienführung von Einbauten in Fahrerkabinen fort und dienen darüber hinaus als Orientierungshilfe bei einer hängenden Montage des Medienvorratsbehälters 1.

### Liste der Bezugszeichen

- 1: Medienvorratsbehälter
- 2: Hohlkörper
- 3: Aufnahmeraum
- 4: Utensilien
- 5: Mantelflächen
- 6: Medien
- 7: Anschluss
- 8: Befüllstutzen
- 9: Trennelemente
- 10: Seitenwände
- 11: Rückwand
- 12: Kanten der Seitenflächen
- 13: Vorderwand
- 14: Haltevorrichtungen
- 15: Kammerwände
- 16: Pumpenaufnahme
- 17: Bodenteil

## Patentansprüche

1. Medienvorratsbehälter (1) für Fahrzeuge, mindestens bestehend aus einem geschlossenen Hohlkörper (2), dessen Mantelflächen (5) derart geformt und zueinander ausgebildet sind, dass diese Mantelflächen (5) Aufnahmeräume (3) für Utensilien (4) bilden und dass das Raumvolumen des Hohlkörpers (2) zur Bevorratung von Medien (6) verwendet wird und dass der Hohlkörper (2) mindestens einen Anschluss (7) an ein Mediensystem aufweist.

2. Medienvorratsbehälter (1) für Fahrzeuge nach Anspruch 1, **dadurch gekennzeichnet, dass** der Hohlkörper (2) und/oder der Aufnahmeraum (3) in seiner geometrischen Form einem Quader oder einem Zylinder entspricht.

3. Medienvorratsbehälter ( 1 ) für Fahrzeuge nach einem der Ansprüche 1 bis 2, **dadurch gekennzeichnet, dass** die Mantelflächen (5) des Hohlkörpers (2) Trennelemente (9) ausbilden, die den Aufnahmeraum (3) in Sektionen teilt.

4. Medienvorratsbehälter (1) für Fahrzeuge nach einem der Ansprüche 1 bis 3, **dadurch gekennzeichnet, dass** der Aufnahmeraum (3) derart ausgebildet ist, dass geschlossene Aufnahmeboxen einbringbar sind.

5. Medienvorratsbehälter (1) für Fahrzeuge nach einem der Ansprüche 1 bis 4, **dadurch gekennzeichnet, dass** der Hohlkörper (2) Kammerwände (15) aufweist, die den Hohlkörper (5) in einzelne Kammerbereiche zur Bevorratung verschiedener Medien (6) unterteilen.

6. Medienvorratsbehälter ( 1 ) für Fahrzeuge nach einem der Ansprüche 1 bis 5, **dadurch gekennzeichnet, dass** die Kammerwände (15) derart ausgebildet sind, dass eine Wärmeübertragung zwischen Kammerbereichen stattfindet.

7. Medienvorratsbehälter (1) für Fahrzeuge nach einem der Ansprüche 1 bis 6, **dadurch gekennzeichnet, dass** die Kammerbereiche zur Bevorratung von Medien jeweils eine Füllstandsanzeige und/oder einen Befüllstutzen (8) aufweisen und im Sichtbereich des Fahrers angeordnet sind.

8. Medienvorratsbehälter (1) für Fahrzeuge nach einem der Ansprüche 1 bis 7, **dadurch gekennzeichnet, dass** die Befiillstutzen der medienbevorratenden Kammerbereiche des Hohlkörpers (2) innerhalb der Fahrerkabine angeordnet sind.

9. Medienvorratsbehälter (1) für Fahrzeuge nach einem der Ansprüche 1 bis 8, **dadurch gekennzeichnet, dass** dieser in das Armaturenbrett integriert ist.

10. Medienvorratsbehälter (1) für Fahrzeuge nach einem der Ansprüche 1 bis 9, **dadurch gekennzeichnet, dass** an oder im Hohlkörper (2) Pumpen angeordnet sind, wobei diese an das nachgeschaltete Mediensystem anschließbar sind.

11. Medienvorratsbehälter (1) für Fahrzeuge nach einem der Ansprüche 1 bis 10, **dadurch gekennzeichnet, dass** die Wandungen des Hohlkörpers (2) thermisch isoliert sind oder derart ausgebildet sind, dass eine Wärmeübertragung zwischen Kammerbereichen und dem Aufnahmeraum realisiert wird.

12. Medienvorratsbehälter (1) für Fahrzeuge nach einem der Ansprüche 1 bis 11, **dadurch gekennzeichnet, dass** die Kammerbereiche oder der Aufnahmeraum des Hohlkörpers einen Wärmeübertrager aufweisen.
